# EUROPEAN PATENT SPECIFICATION

(11) **EP 1 857 646 B1**
(45) Date of publication and mention of the grant of the patent: **15.10.2014**
(21) Application number: 07108261.4
(22) Date of filing: 15.05.2007
(51) Int. Cl.: F01M 11/00

(54) **Oil pick-up tube for engine**
Ansaugrohr für Motoröl
Tube d'aspiration d'huile pour moteur

(30) Priority: 17.05.2006 IT MI20060974
(43) Date of publication of application: 21.11.2007
(73) Proprietor: FPT Industrial S.p.A., 10156 Torino (IT)
(72) Inventor: Capodiferro, Romeo, 10095, TORINO (IT)
(74) Representative: Borsano, Corrado

(56) References cited:
- EP-A- 1 484 488
- DE-A1- 10 305 184
- FR-A- 2 311 926
- GB-A- 1 521 710
- US-A- 2 893 563
- US-A- 3 458 050
- US-A1- 2005 279 314

## Description

### TECHNICAL FIELD

The present invention relates to a rose pipe for the suction of engine oil from the oil sump of an engine, specifically to an internal combustion engine, more specifically to a vehicle engine.

### BACKGROUND ART

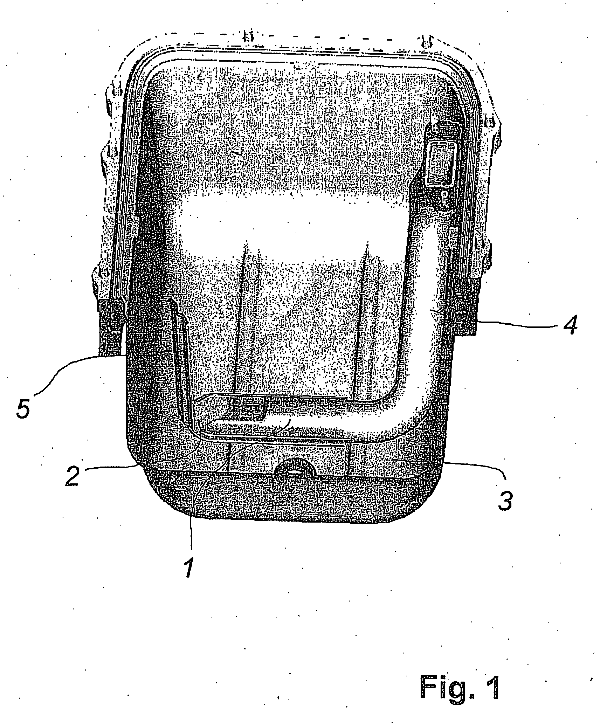

Internal combustion engines, specifically alternating engines in general possess a lubrication system in which a circulation pump, driven in an appropriate way, commonly by the engine itself, sucks oil from a dedicated reservoir, usually the oil sump at the base of the engine, and sends it to the various parts to be lubricated, from where it then returns to the reservoir. A pipe, commonly known as a rose pipe has an extremity that draws below the level of the oil in the reservoir and through said pipe the pump can aspire the oil. In order to avoid foreign bodies, of dimensions such as to damage the pump or other lubrication circuit organs, accidentally present in the reservoir, specifically in the oil sump, a suitable net is provided at the rose pipe entrance (See for example EP 1 304 451 A2). Such bodies can be processing residues or elements such as screws or the like; the net is not intended to filter the oil, but rather is only provided as a safety element. The solutions adopted to date take into consideration the need to provide a sufficient passage surface across the network, in order to avoid excessive load loss and possible blockage. Figure 1 illustrates a possible solution, wherein the terminal portion 1, closed at extremity 2, of the rose pipe extends horizontally into the oil sump 3. The lower half of the wall of the horizontal portion of the rose pipe presents holes of an adequate dimension and concentration, so that the wall itself represents the barrier net against the foreign bodies as indicated above. The length of the horizontal portion allows an adequate passage surface in the light of the aforesaid. The terminal portion can be made separately from the rose pipe portion 4 in which it is made as a complete pipe, in the known art, and be threaded onto such portion and/or joined thereto by welding or brazing or other known way.

The solution indicated above is equally simple, but not entirely satisfactory: firstly, with the holes that regard part of the pipe wall, not all the holes are at the same level. This raises the minimum oil level that allows the rose pipe to suck, guaranteeing circulation. Furthermore, in order to give an adequate passage surface, it is necessary that the horizontal portion extends considerably. This entails a certain encumbrance inside the oil sump, which may prove to be inconvenient during maintenance operations. In order to avoid damage caused by vibrations, it is necessary that the rose pipe be anchored in several points, as illustrated, in particular by means of a bracket 5 by the closed extremity 2 of the horizontal portion. Furthermore, the construction of the horizontal portion to be fixed to the rest of the rose pipe complicates construction with an increase in the parts to be joined, generally by brazing or welding.

A solution is therefore needed able to simplify the construction of the rose pipe and its assembly inside the oil sump, in any case avoiding blockage problems.

### SUMMARY OF THE INVENTION

The above drawbacks have been solved according to the present invention by a rose pipe suited to sucking oil from a reservoir by means of an suction extremity provided with a net suited to retaining solid bodies over a preset dimension, characterised by the fact that said net is housed at least in part inside said rose pipe.

Net is intended as any structure suited to allowing the passage of the oil and the retaining of solid bodies over a certain dimension. For example it may be a metal sheet that presents holes or slits of a suitable dimension.

According to a preferred embodiment, the net can have a tapered form and may preferably comprise a conical surface, which can be coaxial with the rose pipe. According to a possible embodiment, the form of the net is tapered so as to narrow towards the interior of the rose pipe. According to a different embodiment, the net tends to widen towards the interior of the rose pipe.

The invention also relates to an engine, specifically an internal combustion engine, more specifically a vehicle engine, fitted with an oil circulation lubrication system, comprising an oil reservoir and a rose pipe as described above.

Particular objects of the invention are contained in the appended claims.

### LIST OF THE FIGURES

The present invention will now be illustrated by means of the detailed description of preferred, but non-limiting embodiments, provided as a pure example, with the aid of the appended figures, wherein:
figure 1 (already discussed above) illustrates a schematic view of the oil sump of a vehicle engine with rose pipe according to the known art;
figure 2 schematically illustrates a longitudinal section view of a portion of a rose pipe according to a further embodiment of the present invention;
figure 3 schematically illustrates a longitudinal section view of a portion of a rose pipe; which is not a part of the invention;

### DETAILED DESCRIPTION OF AN EMBODIMENT

The rose pipe according to the present invention is a portion of piping having an suction extremity, piping that can advantageously have a circular section at least in the portion around said extremity; this is suited to being immersed underneath the surface of the oil present in a reservoir, preferably the oil sump of an engine.

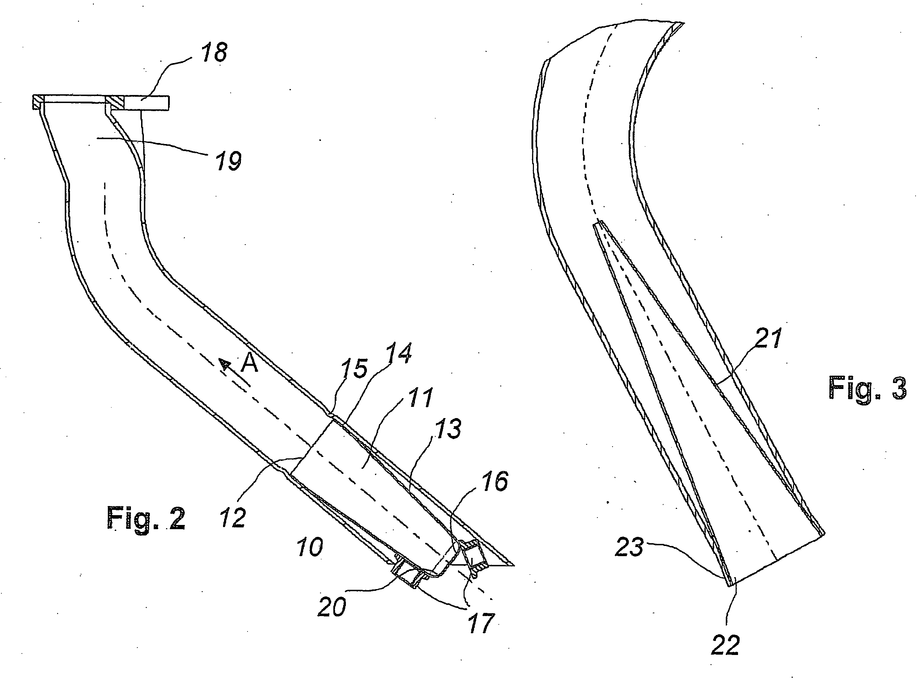

Figure 2 illustrates a section view of the rose pipe, whose extremity 10 is provided with the net 11. The net 11 may be completely or at least in part contained inside the rose pipe. In this way it is impossible to have an adequate oil passage surface without having to excessively extend the suction extremity into the cup above the surface of the water. In the case depicted, the net is tapered towards the exterior of the rose pipe. The net of the example presents an edge 12 that forms a seal with the rose pipe walls and a conical surface 13: the latter can preferably be substantially coaxial with the rose pipe. In this case, where the edge 12 is inserted deep into the rose pipe, the cylindrical portion 14 may be present, that allows better net centring and stability. The rose pipe may present the narrowing 15, or a series of punchings on which the edge of the net may rest. Considering the oil flow in the direction of arrow A, the embodiment described above allows to assemble the rose pipe net simply by pushing it into place, thus eliminating the necessity for brazing or welding. According to the invention, the conical net that narrows towards the exterior has a substantially frustoconical shape, closed by the portion 16, suitably united to the surface 13. The portion 16 can be flat, rounded or even have a cap shape. All this allows to give a suitable slant to the conical part of the net, in such a way that the space between it and the rose pipe wall does not allow the entry of extraneous bodies over a determined dimension. Reference 17 shows, in order to better illustrate the above concept, two extraneous bodies (bolt nuts of the size commonly used for the assembly of engines) retained by the net to the outside. This reduces the possibility of blockage and facilitates the removal of the extraneous bodies during maintenance. For example, the sizing may be such as to prevent the entry of M8 nuts, which are common in vehicle engine assembly.

According to a preferred embodiment, the extremity 10 of the rose pipe is cut on an oblique plane, i.e. not perpendicular to the rose pipe axis. Depending on how the rose pipe is assembled, the cut plane can be such as to be arranged horizontally and it can be parallel to the bottom of the oil sump, at a preset distance therefrom, which can be, according to a possible embodiment, preferably very small, between 5 and 20 mm, for example 10mmcompatibly with the possibility of having an oil passage without significant resistances. This allows to make as low as possible the minimum level of oil present in the sump capable of allowing oil circulation. Furthermore, the reduced space between the rose pipe extremity and the bottom of the sump can prevent the net from coming out of the rose pipe even if there was a possibility of sliding between the two components, rather than a rigid connection. With an adequate dimensioning of the various parts the net can be simply slid into the rose pipe before assembly and be auto-centred as seen above. This simplifies both construction and assembly and dismantling of the various components, if required.

It is also possible for an extreme portion 20 to protrude from the rose pipe extremity in any case.

The rose pipe may comprise means 18 of connection to other parts of the oil line, such as union parts 19, should the shape of the section vary, all this can be made according to the known art. Anchoring means are also provided. For example, the rose pipe can be simply fastened to oil line parts from the opposite extremity to that of suction, in the same way as for the known art; rose pipe clamping means can be provided, such as a suitably shaped bracket, for example in proximity of the suction extremity at the side walls of the sump, in order to reduce the vibrations and the load and deformation due to the rose pipe weight, especially while it sucks oil the means can anchor the rose pipe to a sump wall, or to the upper edge thereof, and can be chosen by those skilled in the art according to the rose pipe shape and the drawing point in the sump and according to requirements in general.

Examples have been given of rose pipes with circular sections in the suction part; however, with opportune modifications, the teachings set forth above can be applied to other sections, such as rectangular ones (with pyramidal or frustopyramidal shapes, for example).

Typical rose pipe diameters for industrial vehicle engines can be between 20mm and 40 mm, for example around 30 mm in the case of non-circular sections having dimensions such that the transverse area is similar. The net can be such as to have a total passage space, for example in the case of 30mm rope pipes, between 300 and 10,000 mm² for example behind 5,000 and 6,000 mm².

The net can be similar, as regards the shape and dimension of the holes and total passage space per unit of surface, to the nets commonly used for the same purpose in the known art. The nets can be obtained, depending on the shape and thickness, with known techniques, such as drawing, or folding and welding and others still. The holes can be holes or slits, which may have an elongated shape, oriented along the walls of the net in a direction parallel to that of the overall flow of oil in the tube, in order to provide minimum resistance. To this end, in the case of slits, the lips can be directed towards the interior of the rose pipe in order to ease the passage of oil.

As an example, the holes can have a minimum diameter or width of between 1.5 and 3 mm, for example 1.5. In any case, sizing can be chosen with great freedom considering also the rose pipe portion available to house the net therein.

## Claims

1. Rose pipe suited to sucking oil from a reservoir by means of a suction extremity (10) provided with a net (11) suited to retaining solid bodies over a preset dimension, said net being housed at least in part inside said rose pipe, **characterised in that** said net (11) is made of metal and narrows towards the exterior of the rose pipe, said net (11) having a conical surface (13) coaxial with the rose pipe and a cylindrical portion (14) for centring and for stabilizing said net into said rose pipe, said net having a frustoconical shape closed by a slant portion (16) united to said conical surface (13)

2. Rose pipe according to claim 1, wherein said net is a sheet that presents holes or slits of a suitable dimension.

3. Rose pipe according to any of the previous claims, wherein said net comprising a cone-shaped wall (13), coaxial with the rose pipe.

4. Rose pipe according to claim 1, wherein said net has a frustoconical shape and the rose pipe presents a narrowing or recesses (15) suited to retaining the net.

5. Rose pipe according to any of the previous claims, wherein the suction extremity (10) presents a cut along a plane not perpendicular to the rose pipe axis.

6. Combustion engine fitted with an oil circulation lubrication system, comprising an oil sump and a rose pipe according to any of the previous claims, wherein said rose pipe has an suction extremity (10) cut according to a plane which is arranged horizontally parallel to the bottom of the oil sump and at a preset distance therefrom, said preset distance being between 5 and 20 mm.

## Patentansprüche

1. Ansaugrohr, geeignet zum Ansaugen von Öl von einem Reservoir mittels eines Ansaug-Endes (10), das versehen ist mit einem Netz (11), das geeignet ist zum Zurückhalten fester Körper oberhalb einer vorausbestimmten Dimension, wobei das Netzt wenigstens zum Teil innerhalb des Ansaugrohrs untergebracht ist, **dadurch gekennzeichnet, daß** das Netz (11) aus Metall hergestellt ist und sich in Richtung auf die Außenseite des Ansaugrohrs verjüngt, wobei das Netz (11) eine kegelförmige Oberfläche (13), die koaxial mit dem Ansaugrohr ist, und einen zylindrischen Teilbereich (14) zum Zentrieren und zum Stabilisieren des Netzes in dem Ansaugrohr aufweist, wobei das Netz eine Kegelstumpf-artige Form aufweist, die mittels eines schrägen Teilbereichs (16) geschlossen ist, der mit der kegelförmigen Oberfläche (13) vereinigt ist.

2. Ansaugrohr nach Anspruch 1, worin das Netz eine Platte ist, die Löcher oder Schlitze einer geeigneten Dimension aufweist.

3. Ansaugrohr nach irgendeinem der vorigen Ansprüche, worin das Netz eine kegelförmige Wand (13) umfaßt, die koaxial mit dem Ansaugrohr ist.

4. Ansaugrohr nach Anspruch 1, worin das Netz eine Kegelstumpf-artige Form aufweist und das Ansaugrohr eine Verengung oder eine Kerbe (15) präsentiert, die geeignet ist, das Netz zu halten.

5. Ansaugrohr nach irgendeinem der vorigen Ansprüche, worin das Ansaug-Ende (10) einen Schnitt entlang einer Ebene präsentiert, die nicht senkrecht zu der Ansaugrohr-Achse ist.

6. Verbrennungsmotor, ausgerüstet mit einem Ölkreislauf-Schmiersystem, umfassend einen Ölsumpf und ein Ansaugrohr gemäß irgendeinem der vorigen Ansprüche, worin das Ansaugrohr ein Ansaug-Ende (10) aufweist, das gemäß einer Ebene geschnitten ist, die horizontal parallel zum Boden des Ölsumpfes und in einer vorausbestimmten Entfernung davon verläuft, wobei die vorausbestimmte Entfernung zwischen 5 und 20 mm ist.

## Revendications

1. Tuyau crépine approprié pour aspirer de l'huile à partir d'un réservoir au moyen d'une extrémité d'aspiration (10) pourvue d'un filet (11) approprié pour retenir des corps solides de plus d'une dimension prédéterminée, ledit filet étant logé au moins en partie à l'intérieur dudit tuyau crépine, **caractérisé en ce que** ledit filet (11) est fait de métal et se rétrécit vers l'extérieur du tuyau crépine, ledit filet (11) possédant une surface conique (13) coaxiale avec ledit tuyau crépine et une partie cylindrique (14) pour centrer et pour stabiliser ledit filet dans ledit tuyau crépine, ledit filet présentant une forme tronconique fermée par une partie inclinée (16) unie à ladite surface conique (13).

2. Tuyau crépine selon la revendication 1, dans lequel ledit filet est une feuille qui présente des trous ou des fentes de dimension appropriée.

3. Tuyau crépine selon une quelconque des revendications précédentes, dans lequel ledit filet comprend une paroi de forme conique (13), coaxiale avec le tuyau crépine.

4. Tuyau crépine selon la revendication 1, dans lequel ledit filet a une forme tronconique et le tuyau crépine présente un rétrécissement ou des évidements (15) appropriés pour retenir le filet.

5. Tuyau crépine selon une quelconque des revendications précédentes, dans lequel l'extrémité d'aspiration (10) présente une coupe le long d'un plan non perpendiculaire à l'axe de tuyau crépine.

6. Moteur à combustion équipé d'un système de lubrification à circulation d'huile, comprenant un carter d'huile et un tuyau crépine selon une quelconque des revendications précédentes, dans lequel ledit tuyau crépine comporte une extrémité d'aspiration (10) coupée selon un plan qui est agencé de façon horizontalement parallèle au fond du carter d'huile et à une distance prédéterminée de celui-ci, ladite distance prédéterminée étant entre 5 et 20 mm.
